# EUROPEAN PATENT SPECIFICATION

(11) **EP 1 640 626 B1**
(45) Date of publication and mention of the grant of the patent: **09.11.2011**
(21) Application number: 04745737.9
(22) Date of filing: 10.06.2004
(51) Int. Cl.: F16C 33/12, F16C 33/10, F16C 3/02, C23C 26/00, C04B 41/87, F01D 17/16

(54) **SURFACE TREATMENT METHOD FOR ROTATING MEMBER, HOUSING, BEARING, GEARBOX, ROTATING MACHINE AND SHAFT STRUCTURE**
OBERFLÄCHENBEHANDLUNGSVERFAHREN FÜR ROTATIONSGLIED, GEHÄUSE, LAGER, GETRIEBE, ROTATIONSMASCHINE UND WELLENKONSTRUKTION
PROCEDE DE TRAITEMENT DE SURFACE POUR ELEMENT ROTATIF, CARTER, PALIER, BOITE DE VITESSES, MACHINE ROTATIVE ET STRUCTURE D'ARBRE

(30) Priority: 11.06.2003 JP 2003166992; 11.06.2003 JP 2003167030
(43) Date of publication of application: 29.03.2006
(60) Divisional application: 11179918.5
(73) Proprietor: IHI Corporation, Tokyo 135-8710 (JP); MITSUBISHI DENKI KABUSHIKI KAISHA, Chiyoda-ku Tokyo 100-8310 (JP)
(72) Inventor: OCHIAI, Hiroyuki c/o Ishikawajima-Harima, Chiyoda-ku Tokyo 100-8182 (JP); WATANABE, Mitsutoshi c/o Ishikawajima-Harima, Chiyoda-ku Tokyo 100-8182 (JP); FURUKAWA, Takashi c/o Ishikawajima-Harima, Chiyoda-ku Tokyo 100-8182 (JP); GOTO, Akihiro c/o Mitsubishi Denki, Chiyoda-ku Tokyo 100-8310 (JP); AKIYOSHI, Masao c/o Mitsubishi Denki, Chiyoda-ku Tokyo 100-8310 (JP)
(74) Representative: Oxley, Robin John George
(86) International application number: PCT/JP2004/008107
(87) International publication number: WO 2004/113748

(56) References cited:
- JP-A- 5 125 521
- JP-A- 8 312 373
- JP-A- 9 031 628
- JP-A- 11 001 753
- JP-A- 58 131 427
- JP-A- 2000 136 827
- JP-A- 2000 329 139
- JP-A- 2001 072 986
- JP-A- 2002 276 646
- JP-A- 2003 129 219
- US-B1- 6 495 002

## Description

### TECHNICAL FIELD

The present invention relates to a bearing for a rotation body, where, for example, a pulsing electric discharge is generated between a molded body molded from powder of metal compounds as an electrode and a rotation member at an engaging portion between a housing of a gear box and a rotation member of the gear box, and a coating of the electrode material is formed on the bearing by means of energy of the electric discharges.

Moreover, for example, the present invention relates to a shaft for a variable stator which is provided in a compressor of a gas turbine, a structure of a shaft of a variable stator of a variable turbine nozzle in a turbo charger and a method for surface treatment thereof, and more particularly to a structure in which a shaft is provided with a coating layer having anti-abrasiveness and lubricity and a method for surface treatment thereof.

### BACKGROUND ART

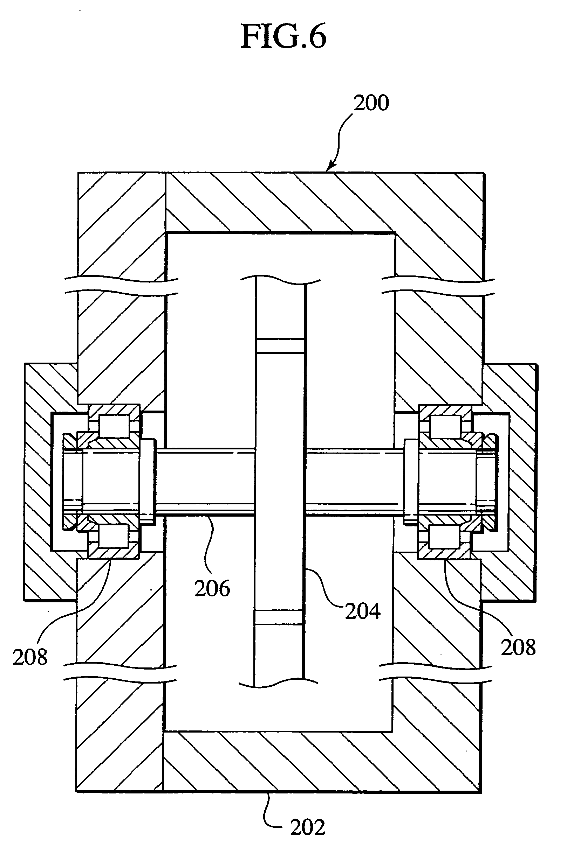

Fig. 6 is a cross sectional view showing a schematic constitution of a prior accessory drive gear box 200.

The accessory drive gear box 200 for driving equipments such as an electric generator and a hydraulic pump is provided with a housing 202.

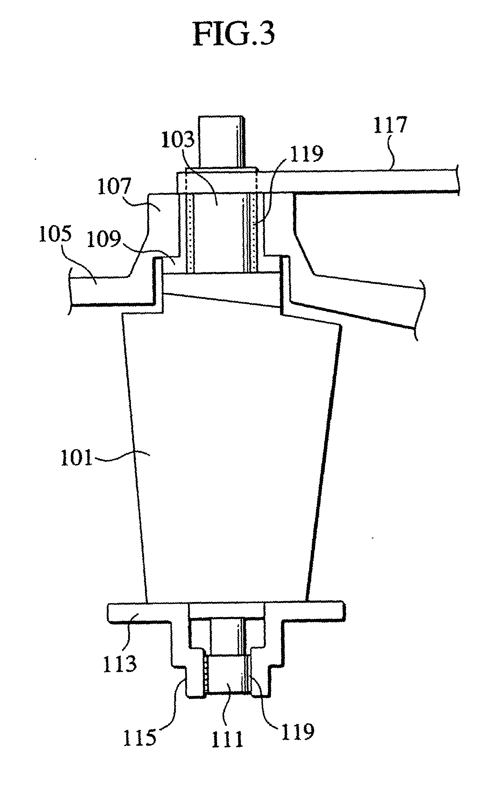

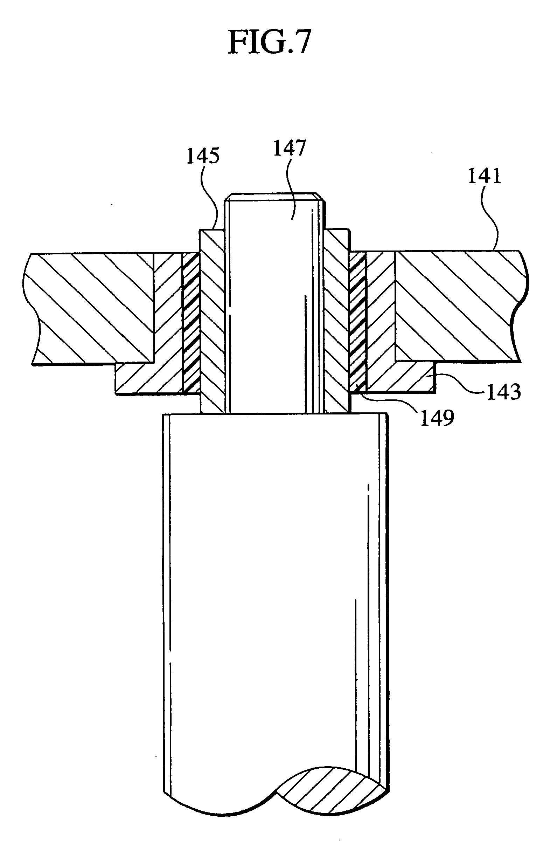

Moreover, a rotation axis member (a rotation member) 206 integrally formed with a gear 204 is provided with interposing a roller bearing 208 such as a cylindrical roller bearing so as to be rotatable with respect to the housing 202 (for example, "New Aeronautical Engineering, volume 8, Jet Engine (Structure Part)", published by Japan Aeronautical Engineers' Association, May 29, 2000, the 1st edition, the 6th printing, p99 Fig. 3-73). On the other hand, as a speed reducer and such, a rotation member of which has greater revolution numbers than the accessory drive gear box 200, there is known one using a fluid bearing instead of the roller bearing.

Moreover, a compressor provided in a gas turbine is provided with a variable stator. When abrasion occurs at a shaft of the variable stator and a clearance therebetween comes to be greater, precision of a direction angle of the variable stator decreases, therefore the whole of the variable stator has to be detached and exchanged when the abrasion of the shaft comes to be great. Therefore, there is proposed a constitution in which a detachable abrasive sleeve is provided on the shaft for protection of the shaft and a wore abrasive sleeve is exchanged to a new abrasive sleeve when the abrasive sleeve is greatly wore (for example, Japanese Patent Application Laid-open No. 2000-329139).

Meanwhile, in the prior accessory drive gear box 200, since the bearing is composed of the roller bearing, there is a problem that the bearing is hard to be installed in a small space.

On the other hand, the fluid bearing has a problem that, if a film of oil does not transiently exist, the housing and the rotation member directly contact each other and hence durability of the bearing may deteriorate.

The above problem may also occur to any gear box other than the accessory drive gear box and further any bearing of a machine or a device provided with a housing and a rotation member which is rotatable relative to the housing (the bearing between the housing and the rotation member).

Moreover, the constitution disclosed in the aforementioned patent publication is a constitution as shown in Fig. 7 in which a shaft portion 147 of a variable stator detachably having an abrasive sleeve 145 is fit into a cylindrical bush 143 fit in a hole provided in a housing 141 and an antifriction layer 149 made of a material of low friction is provided between an outer periphery of the abrasive sleeve 145 and an inner periphery of the bush 143.

In accordance with the aforementioned constitution, since the shaft portion 147 is protected by the abrasive sleeve 145, wear of the shaft 147 may be prevented, however, since the abrasive sleeve 145 is subject to wear, the abrasive sleeve 145 needs to be detached and exchanged. More specifically, since the shaft portion 147 is prevented from wear, the whole of the variable stator is unnecessary to be exchanged, however, there is a problem that detachment and exchange of the abrasive sleeve 145 needs to be accomplished at relatively frequent intervals.

U.S. Patent No. 6,495,002 is directed to a method and apparatus for depositing a ceramic film on a substrate by vacuum arc deposition.

### DISCLOSURE OF INVENTION

The present invention based on a first aspect is a method for forming a coating on a rotation member for rotatably or swingably engaging with a housing, or a housing for rotatably or swingably engaging with a rotation member;
wherein the rotation member or the housing comprises an engaging portion for engaging in use with the other of the rotation member or the housing, the engaging portion having the coating formed thereon, the method being characterised by comprising the steps of:
generating a pulsing electric discharge between an electrode and the rotation member in a processing liquid, the electrode comprising:
   a molded body molded from a metal powder, a silicon powder, or a mixture of powders of one or more of metal compounds or ceramics, or
   the molded body after being processed with a heat treatment;
   depositing a layer of an electrode material or any substance combined from the electrode material on the rotation member or the housing by energy of the electric discharge; and
   reciprocally carrying out the step of depositing to form the coating being composed of deposited layers.

In a preferred embodiment, the electrode comprises the electrode comprises the molded body formed from any one or more of Ti, Si, cBN, TiC, WC, SiC, Cr₃C₂, Al₂O₃, ZrO₂-Y, TiN, TiB, hexagonal BN, MoS₂, Cr₂O₃, WS₂ and BaZrO₄.

The step of generating may comprise making the electrode close to the engaging portion and rotating the rotation member to form the coating on the engaging portion.

According to a second aspect of the present invention there is provided a method of forming a bearing of a rotation member rotatably engagable with a housing, characterised by:
coating an engaging portion of the rotation member using the method defined above, and further comprising:
   engaging an engagement subject portion of the housing with an engaging portion, the engagement subject portion having a slightly larger inner diameter than an outer diameter of the engaging portion.

According to a third aspect of the present invention there is provided a method of forming a gear box drivable by a turbine shaft of a gas turbine, characterised by:
providing a housing supported by an engine casing of the gas turbine at the exterior of the engine casing and;
coating one or other of the housing or a rotation member using the method of coating defined above;
engaging the rotation member provided with an engaging portion engaging with an engagement subject portion of the housing so as to be rotatable relative to the housing in the interior of the housing;
wherein an inner diameter of the engagement subject portion is formed slightly larger than an outer diameter of the engaging portion; and
forming a groove for pooling a lubrication liquid on the engagement subject portion of the housing.

According to a fourth aspect of the present invention there is provided a method of forming a rotating machine comprising coating a rotation member using the method of coating defined above, the rotation member being rotatable in a casing, and engaging the rotation member with a roller bearing mounted in the casing.

According to a fifth aspect of the present invention there is provided a method of forming a gear box drivable by a turbine shaft of a gas turbine, characterised by:
providing a housing supported by an engine casing of the gas turbine at the exterior of the engine casing and;
coating one or other of the housing or a rotation member using the method of coating defined above;
engaging the rotation member provided with an engaging portion engaging with an engagement subject portion of the housing so as to be rotatable relative to the housing in the interior of the housing;
wherein an inner diameter of the engagement subject portion is formed slightly larger than an outer diameter of the engaging portion; and
forming a groove for pooling a lubrication liquid on the engagement subject portion of the housing.

According to a sixth aspect of the present invention there is provided a method of forming a rotating machine comprising coating a rotation member using the method of coating defined above, the rotation member being rotatable in a casing, and engaging the rotation member with a roller bearing mounted in the casing.

According to a seventh aspect of the present invention there is provided a method for surface treatment of a shaft of variable vanes for regulating a fluid characterised by generating a pulsing electric discharge between an electrode including any ceramic selected from the group of cBN, TiC, WC, SiC, Cr₃C₂, Al₂O₃, ZrO₂-Y, TiN, and TiB, or containing the ceramic and any solid lubricant selected from the group of hexagonal BN, MoS₂, Cr₂O₃, WS₂ and BaZrO₄ and a shaft portion of the variable vanes for regulating the fluid, and forming a coating layer composed of electrode constituents or compounds combined in an electric discharge atmosphere having anti-abrasiveness and lubricity on a surface of the shaft portion, the coating being composed or deposited layers formed by reciprocally carrying out welding by the electric discharges.

Preferably, the coating layer is formed with rotating the shaft of the variable vanes for regulating the fluid.

### BRIEF DESCRIPTION OF DRAWINGS

Fig. 1 A cross sectional view showing a schematic constitution of an accessory drive gear box in accordance with an embodiment of the present invention.
Fig. 2 A view showing a IIA-IIB cross section in Fig. 1.
Fig. 3 An explanatory drawing for embodying the present invention as variable vanes in a shaft portion of a variable stator provided in a compressor of a gas turbine engine.
Fig. 4 An explanatory drawing explaining a case of forming a coating layer having anti-abrasiveness and lubricity on the shaft of the variable vanes.
Fig. 5 An explanatory drawing showing a constitution of the coating layer.
Fig. 6 A cross sectional view showing a schematic constitution of a prior accessory drive gear box.
[Fig. 7] An explanatory drawing showing a constitution of a shaft portion of a variable stator.

### BEST MODE FOR CARRYING OUT THE INVENTION

### [FIRST EMBODIMENT]

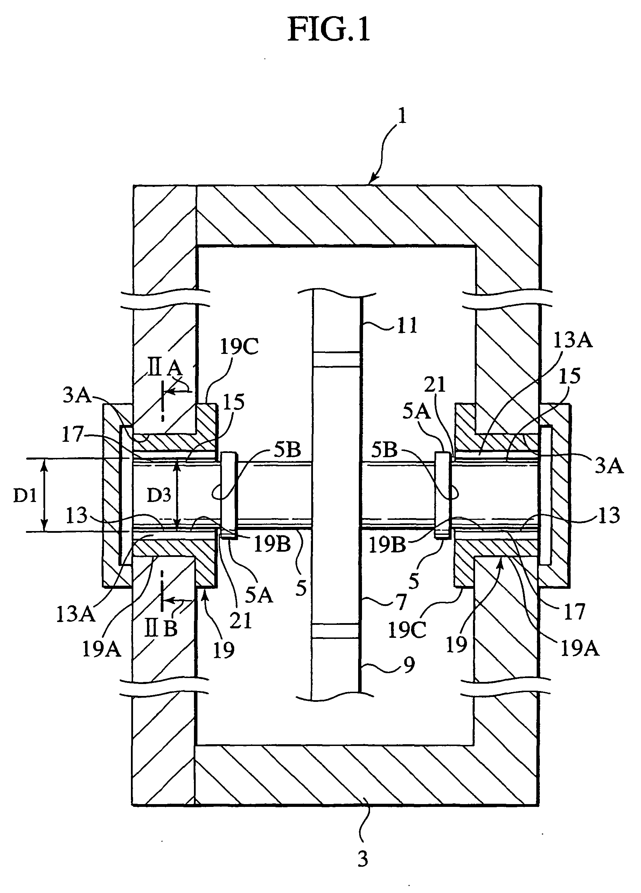

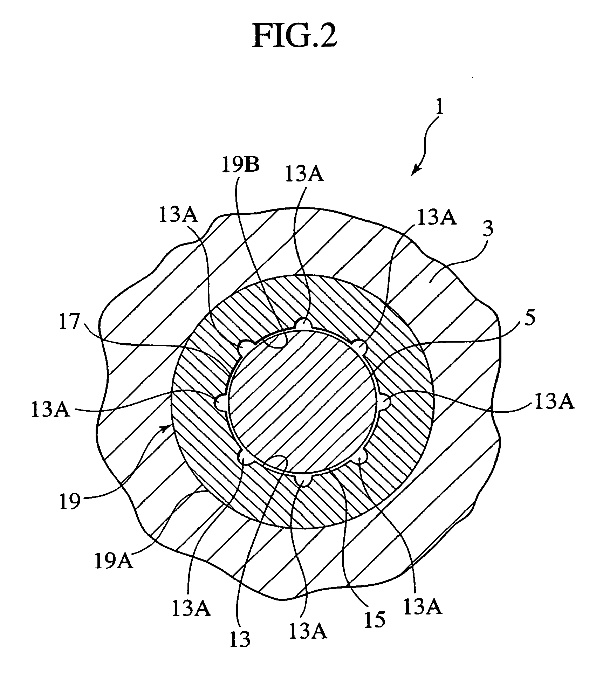

Fig. 1 is a cross sectional view showing a schematic constitution of an accessory drive gear box in accordance with an embodiment of the present invention and Fig. 2 is a view showing a IIA-IIB cross section in Fig. 1.

An accessory drive gear box (it may be referred to as "gear box" hereinafter.) 1 is a gear box driven by a turbine shaft of a gas turbine and used for driving equipments (such as an electric generator and a hydraulic pump) of the gas turbine.

The accessory drive gear box 1 is provided with a housing 3, which is supported at the exterior of an engine casing of the gas turbine by the engine casing. Meanwhile, the engine casing is formed in a cylindrical shape so as to be provided with a compressor and a turbine in the interior thereof and form a gas flow path.

A cylindrical rotation member 5 having electric conductivity is provided in the interior of the housing 3 so as to be rotatable with respect to the housing 3. A gear 7 is integrally provided at a medium portion with respect to a lengthwise direction of the rotation member 5. Respective gears 9 and 11, which is provided integrally with the other rotation members (not shown) provided to be rotatable with respect to the housing 3, engage with the gear 7. Meanwhile,

Further, the rotation member 5 is made to receive a rotational force of the turbine shaft of the gas turbine via the respective gears 9 and 7 so as to rotate. Meanwhile, not-shown equipments such as an electric generator and a hydraulic pump are coupled with the rotation member 5 and rotation of the rotating member 5 makes the electric generator generate electricity and the hydraulic pump generate hydraulic pressure. Moreover, the gear 7 and the gear 11 are capable of making the other rotation members rotate.

At a side of one end portion for example with respect to the lengthwise direction of the rotation member 5 (one end portion at the left side of Fig. 1), an engaging portion 15 formed in a cylindrical side surface and engaged with a engagement subject portion (an opening of a cylindrical side surface shape) 13 of the housing 3 is provided. Further, by engaging at the engaging portion 15, the rotation member 5 is rotatable with respect to the housing 3 in the interior of the housing 3.

An inner diameter D1 of the engagement subject portion 13 of the housing 3 is formed to be slightly larger than an outer diameter D3 of the engaging portion 15 of the rotation member 5 and plural grooves 13A for pooling a lubricating liquid such as a lubricating oil are formed on a surface of the engagement subject portion 13 of the housing 3.

The respective grooves 13A are provided to be long in the lengthwise direction of the rotation member 5 and disposed at positions equally dividing a circumference of the engagement subject portion 13 of the cylindrical side surface shape. Meanwhile, the respective grooves 13A may be provided at the engaging portion 15 of the rotation member 5.

To the grooves 13A, the lubricating liquid such as the lubricating oil is supplied by a pump (now shown) driven by the rotational force of the rotation member 5 for example and, by the supplied lubricating liquid, a thin coating of the lubricating liquid is formed at a space (a narrow clearance) 17 between the engagement subject portion 13 of the housing 3 and the engaging portion 15 of the rotation member 5 so as to form a fluid bearing.

The supply of the lubricating liquid to the grooves 13A by the pump is carried out by, for example, using a through hole (not shown) provided in the housing 3, one end portion of which is linked with the grooves 13A and another end portion of which is linked with an electric discharge port of the pump via a pipe (not shown) for supplying the lubricating liquid. Furthermore, the lubricating liquid supplied to the grooves 13A returns to the interior of the housing 3 and is again supplied to the grooves 13A by the pump.

Moreover, the housing 3 is provided with a hole 3A to engage with an outer peripheral portion 19A of a cylindrical bush 19 to support the bush 19. Further, by inserting the bush 19 into the hole 3A of the housing 3 to be fixed, the engagement subject portion 13 of the housing 3 is formed by an inner peripheral portion 19B of the bush 19.

As such constituted, machining of the engagement subject portion 13 to form the grooves 13A can be carried out with facility. Further, the bush 19 is composed of a white metal or such and the housing 3 can be composed of any material lower in price than the white metal, thereby a production cost of the gear box 1 can be reduced.

The rotation member 5 is provided with a flange 5A and one end face 5B of the flange 5A is opposed to planar one end face 19C in the lengthwise direction of the bush. Moreover, the end face 5B and the end face 19C are slightly separated so as to form a space (a narrow clearance) 21.

Further, because the lubricant liquid supplied to the grooves 13A by the pump passes through the space 21, the space 21 filled with the lubricant liquid forms a fluid bearing of the rotation member 5 in a thrust direction. Therefore, the engagement subj ect portion 13 may be referred to as an engagement subject portion in a radial direction, the end face 5B may be referred to as an engaging portion in the thrust direction and the end face 19C may be referred to as an engagement subject portion in the thrust direction.

Moreover, a fluid bearing similar to the left side is formed at another end portion in the lengthwise direction of the rotation member 5 (one end portion at the right side of Fig. 1).

Next, a coating formed on the surface of the engaging portion 15 of the rotation member 5 will be described.

On the surface of the engaging portion 15, the hard, or small in the coefficient of friction, coating is formed.

The coating is formed by making a member formed by a molded body as an electrode, making the electrode close to (for example in closeness about 0.02mm) the engaging portion 15 of the rotation member 5, generating pulsing small electric discharges between the electrode and the engaging portion 15 of the rotation member 5 in a processing liquid or gas, and gradually depositing the electrode material on the engaging portion 15 by means of its energy.

As the electrode, for example, a porous molded body molded from a powder including one or more ceramics (compounds of metal) such as cBN (cubic boron nitride), TiC (titanium carbide), WC (tungsten carbide), SiC (silicon carbide), Cr₃C₂ (chromium carbide), Al₂O₃ (aluminum oxide; alumina), ZrO₂-Y (stabilized zirconium oxide; stabilized zirconia), TiN (titane nitride), TiB (titanium boride) or containing these ceramics and a solid lubricant including one or more of solid lubricants such as hexagonal BN (boron nitride), MoS₂ (molybdenum disulfide), Cr₂O₃, WS₂ (tungsten disulfide) and BaZrO₄ (barium zirconate) by, for example, compressing them is used. Alternatively, a molded body produced by carrying out heat treatment with the aforementioned molded body in a vacuum furnace is used. Therefore, the coating is formed from the same material as the electrode or any compound combined in the electric discharge atmosphere.

Meanwhile, in a case where the electrode does not have electric conductivity, one uses what fine-powder-like metal and fine-powder-like ceramic are mixed and combined to form as an electrode for deposition. Alternatively, an electrode for deposition, which is formed from fine-powder-like ceramic, surfaces of which is coated with a material having electric conductivity, is used.

Alternatively, instead of the electrodes, one may compress and mold metal powder such as Si(silicon) and Ti(titanium) and form an electrode from a compressed powder body which is formed from the compressed and molded substance by heat treatment. More specifically, a porous electrode formed by combining fine metal powder such as Si and Ti may be used. In this case, electric discharge is generated in a condition that the electrode and the engaging portion 15 of the rotation member 5 exists in a processing liquid containing alkane hydrocarbons such as kerosene and a coating of substances reacted by means of energy of the electric discharge (for example, a substance composed of SiC or TiC) is formed on the surface of the engaging portion 15 of the rotation member 5.

Furthermore, instead of compressing and molding, slurry pouring, MIM (Metal Injection Molding), spray forming (forming by spraying) and such may be applied to forming of the electrode.

Still furthermore, instead of the porous electrode formed by combining fine metal powder of Si, an electrode formed of metallic Si (a crystal of Si without having any cavities therein) may be used.

In accordance with the gear box 1, in the bearing between the rotation member 5 and the housing 3, a roller bearing is deleted and a fluid bearing is formed instead. Further, hard, or of low friction, coating is formed at the engaging portion 15 of the rotation member 5.

Moreover, because the coating is composed of deposited layers gradually formed by reciprocally carrying out small welding by the electric discharges, gradient alloy layers are formed in a thickness direction of the coating and cohesive strength between the coating and a main body portion of the rotation member 5 is hence strengthened, thereby the coating is unlikely to peel off from the main body portion of the rotation member 5.

Therefore, even if a film of the lubricant liquid between the engaging portion 15 of the rotation member 5 and the engagement subject portion 13 of the housing 3 does not transiently exist for some reason, in other words, if the engaging portion 15 of the rotation member 5 and the engagement subject portion 13 of the housing 3 directly contact each other, the bearing is unlikely to wear and further the bearing is insusceptible to being broken by seizing and such and, as well, the bearing can be installed in a smaller space as compared with prior arts.

More specifically, in accordance with the bearing of the gear box 1, or in other words the fluid bearing between the rotatin member 5 and the bush 19 (the housing 3), durability can be made higher as compared with the prior fluid bearing and it can be installed in a smaller space (a space smaller in a radial direction of the rotation member 5) as compared with the prior roller bearing. Because of capability of installation in a small space, a freedom of design at a time of designing the bearing increases.

Therefore, it may be preferably applied to a gear box of a gas turbine for an airplane, which requires space saving at a time of installation.

Moreover, because the roller bearing comes to be unnecessary, installation is made easier and the production cost can be reduced.

Moreover, if the lubricating liquid is forcibly supplied to a clearance between the engaging portion 15 of the rotation member 5 and the engagement subject portion 13 of the housing 3 by using the pump, the film of the lubricating liquid between the engaging portion 15 of the rotation member 5 and the engagement subject portion 13 of the housing 3 comes to be unlikely to be broken and hence the durability of the bearing is further improved.

Meanwhile, the engagement subject portion 13 and the grooves 13A may be directly, without using the bush 19, formed in the housing 3.

Further, the pump may be deleted to supply the lubricating liquid to the space 17 between the engaging portion 15 and the engagement subject portion 13 and to the space 21 by, for example, pooling an appropriate amount of the lubricating liquid in the housing 3 and stirring the lubricating liquid by the gear 7 of the rotation member 5.

Furthermore, instead of formation of the coating on the engaging portion 15 of the rotation member 5, or in addition to formation of the coating on the engaging portion 15 of the rotation member 5, the coating may be formed on the engagement subj ect portion 13 of the housing 3. Meanwhile, in this case, the formation of the coating is carried out after formation of the grooves 13A on the engagement subject portion 13 of the housing 3.

Further, coatings from the electrode are preferably formed on the end face 5B and the end face 19C in the same way as the case of the engaging portion 15 and the engagement subject portion 13.

Moreover, the coatings may be formed porous. As so formed, the coatings in themselves come to be capable of storing the lubricating liquid and hence any damages such as galling which may happen to the bearing come to be unlikely to happen.

Further, the present embodiment may be applied to any gear boxes other than the accessory gear box and further applied to a bearing of a machine or a device provided with a housing and a rotation member rotatable with respect to the housing (the bearing provided between the housing and the rotation member).

By the way, the turbine of the gas turbine (the gas turbine engine) and the rotation member of the rotating machine are rotatably provided in the engine casing of the gas turbine with the interposed roller bearings, coating from the electrode may be treated on surfaces of regions of the rotation member of the rotating machine such as a turbine or a compressor of a gas turbine, where the inner ring of the roller bearing engages. Meanwhile, in a case of a roller bearing which the inner ring does not exist, the coating may be formed on surfaces of regions where the rollers and such of the roller bearing contacts.

As such, because the coating is formed on the regions where the inner rings and such of the roller bearing engages, any damages such as galling in a case of installing the rotation member of the rotating machine such as the turbine and the compressor of the gas turbine and the roller bearing and wear in a case of driving the gas turbine can be prevented.

### [SECOND EMBODIMENT]

In describing a second embodiment of the present invention by referring the drawings, a case where the present invention is embodied in a variable stator in a compressor provided in a gas turbine will be described. In an axial-flow compressor in a gas turbine, by changing installation angles of inflow guiding fins and upstream several stages of stator vanes, regulation of angle of incidence relative to rotor blades into appropriate values as far as possible is in general carried out.

Referring to Fig. 3, variable stator vanes (variable vanes) 101, an installation angle of which can be changed, are disposed in a ring-like air flow path of the axial-flow compressor in the gas turbine among rows of rotor blades (not shown) at even intervals (only one of them shown in Fig. 3) in a circumferential direction, and shaft portions 103 at outer tip sides with respect to the variable stator vanes 101 are rotatably supported by boss portions 107 of the casing 105 via bushes 109. Shaft portions 111 provided at inner tip sides of the variable stator vanes 101 are swingably supported by boss portions 115 provided at circular bearing members 113, which enclose a rotor (not shown) provided with the rotor blades in the axial-flow compressor.

As well, to swing the variable stator vanes 101 with respect to the shaft portions 103 and 111 as central axes, arms 117 which are long in directions perpendicular to the shaft portions 103 are installed to the shaft portions 103 at the outer tip sides and distal end sides of the arms 117 are pivotally connected with connection portions provided with ring members (not shown) enclosing the casing 105.

Therefore, if the ring members are swung to the peripheral direction of the casing 105, the distal end sides of the arms 117 is moved to the peripheral direction. It leads to that the shaft portions 103 are swung around axial centers and the installation angles are changed.

As mentioned above, repeating swings of the shaft portions 103 and 111 so as to change the angle of the variable stator vanes 1 cause wear of the shaft portions 103 and 111 and thereby clearances around the shaft portions 103 and 111 gradually broaden. If the clearances come to be wide, detachment and exchange of the whole of the variable stator vanes 101 are carried out because deviation of the regulation angle of the variable stator vanes 101 occurs.

Thus, in accordance with the present embodiment, for suppression of wear of the shaft portions 103 and 111, outer peripheral surfaces of the shaft portions 103 and 111 are provided with coating layers 119 having lubricity as well as anti-abrasiveness. The coating layers 119 are so constituted as to contain ceramics such as cBN, TiC, WC, SiC, Cr₃C₂, Al₂O₃, ZrO₂-Y, TiN, TiB so as to improve the anti-abrasiveness and hexagonal BN, MoS₂, Cr₂O₃, WS₂ and BaZrO₄ so as to improve the lubricity.

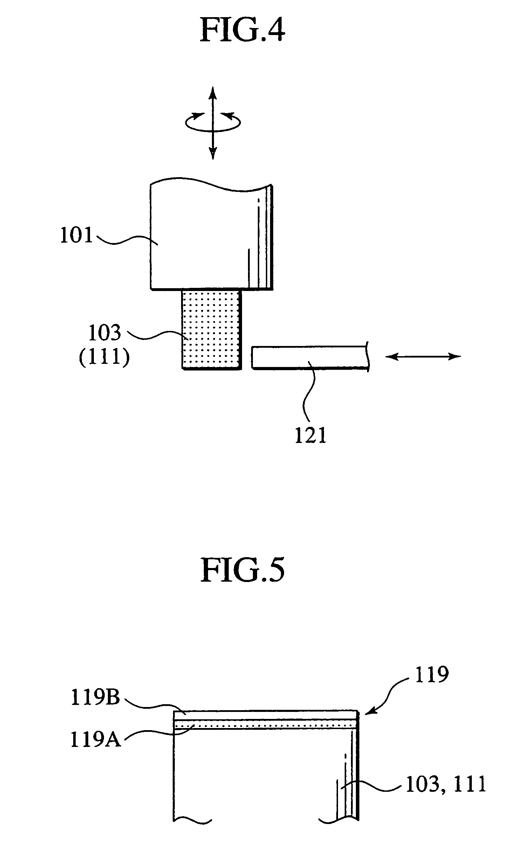

The coating layers 119 are formed in a following manner. More specifically, mixing powder of Ti (about 10%) for assuring electric conductivity, powder of TiC (about 40%) as an example of the ceramics having anti-abrasiveness and powder of hexagonal BN (about 50%) as an example of a lubricant material having lubricity; and compressing and molding them for example are carried out to form a molded body electrode 121 (see Fig. 4). This molded body electrode 121 is preferably subject to heat treatment after compression and molding so as to be temporarily sintered at temperatures below the sintering temperature.

After compressing and molding the molded body electrode 121 as mentioned above, or after compressing and temporary sintering, in a condition that small spaces are kept between the molded body electrode 121 and the shaft portions 103 and 111 of the variable stator vanes 101, as rotating the shaft portions 103 and 111 of the variable stator vanes 101, a pulsing electric discharge is generated therebetween in a processing tank (not shown) of an electric spark machine (not shown) and then electrode constituents of the molded body electrode 121 or compounds combined in the electric discharge atmosphere move to the shaft portions 103 and 111 as basic materials and are deposited on the surfaces of the shaft portions 103 and 111 to form the coating layers 119. The coating layers 119 contain TiC and hexagonal BN and the anti-abrasiveness and the lubricity are improved.

Meanwhile, as the electrode 121, a molded body electrode wherein powder of Ti and powder of hexagonal BN are mixed, compressed and molded, or an electrode wherein the appropriate heat treatment for temporary sintering is carried out, can be used. In these cases, if a pulsing electric discharge happens between the molded body electrode 121 and the shaft portions 103 and 111, any carbides in the processing liquid in the processing tank of the electric spark machine and a part of Ti are combined to form TiC as a compound.

Further, the electrode 121 may be molded by slurry pouring, MIM (Metal Injection Molding), spray forming (forming by spraying) or such.

As mentioned above, because the surfaces of the shaft portions 103 and 111 as the base material are made to be instantaneously fused and solidified by means of the pulsing electric discharge when the coating layers 119 are formed on the shaft portions 103 and 111, the coating layers 119 lead to that diffusion-penetration layers 119A in which TiC and hexagonal BN from the electrode material diffuse and penetrate to several ,m depth from the base material surface are formed and deposit layers 119B in which fine particles of the electrode material are deposited on the diffusion-penetration layers 119A are formed.

As being understood from the above description , in the present embodiment, because it is constituted to provide the coating layers 119 having anti-abrasiveness and lubricity for the shaft portions 103 and 111 of the variable stator vanes 101 provided in the compressor of the gas turbine engine, swing of the variable stator vanes 101 is capable of being smoothly carried out and the anti-abrasiveness of the shaft portions 103 and 111 is improved so that an exchange life of the variable stator vanes 101 comes to be a long life, thereby the aforementioned prior problem can be solved.

More specifically, because it is provided with the coating layers containing ceramics having anti-lubricity and the lubricating material on the peripheral surfaces of the shaft portions provided at the variable vanes for regulating the fluid, the anti-abrasiveness and the lubricity of the shaft portions are improved and the life of the shaft portions is further improved.

Moreover, in the shaft structure of the variable vanes for regulating the fluid, because the coating layers contain ceramics such as cBN, TiC, WC, SiC, Cr₃C₂, Al₂O₃, ZrO₂-Y, TiN, TiB and a lubricating material such as hexagonal BN, MoS₂, Cr₂O₃, WS₂ and BaZrO₄, the anti-abrasiveness and the lubricity are improved.

Moreover, because a pulsing electric discharge is generated between an electrode containing ceramics such as cBN, TiC, WC, SiC, Cr₃C₂, Al₂O₃, ZrO₂-Y, TiN, TiB and a lubricating material such as hexagonal BN, MoS₂, Cr₂O₃, WS₂ and BaZrO₄ and the shaft portions of the variable vanes for regulating the fluid, by forming the coating composed of the electrode constituents or the compounds combined in the electric discharge atmosphere on the shaft portions , the coating layers having anti-abrasiveness and lubricity are formed so that the anti-abrasiveness and the lubricity of the shaft portions are improved and the life of the shaft portions is further improved.

By the way, the present invention is not limited to the embodiments such as aforementioned, and for example the coating layers 119 maybe applied to portions of rotation shafts of swingable vanes (variable vanes) for regulating an impact angle of exhaust gas to vanes of turbine wheels by changing the flow direction of the exhaust gas in a turbo charger which uses the exhaust gas from an engine to compress an air to be supplied to the engine.

If the coating layers 119 are applied to the portions of the rotation shafts of the swingable vanes in the turbo charger, anti-abrasiveness of the rotation shafts is improved so as to be long life as well as swing of the vanes can be smoothly carried out, thereby a similar effect is given.

Meanwhile, in the aforementioned description, though it is described that Ti, TiC and hexagonal BN are contained as constituents of the coating layers 119, as the ceramics, instead of TiC, TiN, TiB and such may be applied. More specifically, proper selection may be allowable as taking anti-abrasiveness, lubricity and a degree of hardening by combining with carbon into consideration.

Moreover, the present invention is not limited to the aforementioned embodiments of the invention and will be embodied in other versions by appropriate modifications.

## Claims

1. A method for forming a coating on a rotation member (5) for rotatably or swingably engaging with a housing (3), or a housing (3) for rotatably or swingably engaging with a rotation member (5);
wherein the rotation member or the housing comprises an engaging portion for engaging in use with the other of the rotation member or the housing (3), the engaging portion (15) having the coating formed thereon, the method being **characterised by** comprising the steps of:
generating a pulsing electric discharge between an electrode and the engaging portion (15) in a processing liquid, the electrode comprising:
a molded body molded from a metal powder, a silicon powder, or a mixture of powders of one or more of metal compounds or ceramics, or
the molded body after being processed with a heat treatment;
depositing a layer of an electrode material or any substance combined from the electrode material on the rotation member or the housing by energy of the electric discharge; and
reciprocally carrying out the step of depositing to form the coating being composed of deposited layers.

2. The method of claim 1, wherein the electrode comprises the molded body formed from any one or more of Ti, Si, cBN, TiC, WC, SiC, Cr₃C₂, Al₂O₃, ZcO₂-Y, TiN, TiB, hexagonal BN, MoS₂, Cr₂O₃, WS₂ and BaZrO₄.

3. The method of any one of claims 1 and 2 for forming a coating on the rotation member (5), wherein the step of generating comprises making the electrode close to the engaging portion (15) and rotating the rotation member (5) to form the coating on the engaging portion.

4. A method of forming a bearing of a rotation member (5) rotatably engagable with a housing (3), **characterised by**:
coating an engaging portion of the rotation member using the method of any one of claims 1 to 3, and further comprising:
engaging an engagement subject portion (13) of the housing (3) with an engaging portion (15), the engagement subject portion (13) having a slightly larger inner diameter (D1) than an outer diameter (D3) of the engaging portion (15).

5. The method of claim 4, further **characterised by** forming a groove (13A) for pooling a lubrication liquid on at least one of the engaging portion (15) and the engagement subject portion (13).

6. A method of forming a gear box (1) drivable by a turbine shaft of a gas turbine, **characterised by** :
providing a housing (3) supported by an engine casing of the gas turbine at the exterior of the engine casing and;
coating one or other of the housing (3) or a rotation member (5) using the method of any one of claims 1 to 3;
engaging the rotation member (5) provided with an engaging portion (15) engaging with an engagement subject portion (13) of the housing (3) so as to be rotatable relative to the housing (3) in the interior of the housing (3);
wherein an inner diameter of the engagement subject portion (13) is formed slightly larger than an outer diameter of the engaging portion (15); and
forming a groove (13A) for pooling a lubrication liquid on the engagement subject portion (13) of the housing (3).

7. A method of forming a rotating machine comprising coating a rotation member (5) using the method of any one of claims 1-3. the rotation member (5) being rotatable in a casing, and engaging the rotation member (5) with a roller bearing mounted in the casing.

8. A method for surface treatment of a shaft (103,111) of variable vanes (101) for regulating a fluid **characterised by** generating a pulsing electric discharge between an electrode including any ceramic selected from the group of cBN, TiC, WC, SiC, Cr₃C₂, Al₂O₃, ZrO₂-Y, TiN, and TiB, or containing the ceramic and any solid lubricant selected from the group of hexagonal BN, MoS₂, Cr₂O₃, WS₂ and BaZrO₄ and a shaft portion (103,111) of the variable vanes (101) for regulating the fluid, and forming a coating layer composed of electrode constituents or compounds combined in an electric discharge atmosphere having anti-abrasiveness and lubricity on a surface of the shaft portion, the coating being composed or deposited layers formed by reciprocally carrying out welding by the electric discharges.

9. The method for surface treatment recited in claim 8, the method for surface treatment **characterised in that** the coating layer is formed with rotating the shaft (103,111) of the variable vanes for regulating the fluid.

## Patentansprüche

1. Verfahren zum Ausbilden eines Überzugs auf einem Rotationselement (5) zum dreh- oder schwenkbaren Eingreifen in ein Gehäuse (3) oder ein Gehäuse (3) zum dreh- oder schwenkbaren Eingreifen in ein Rotationselement (5);
wobei das Rotationselement oder das Gehäuse einen Eingriffsteil umfasst, um beim Gebrauch in das jeweils andere aus Rotationselement und Gehäuse (3) einzugreifen, wobei der Überzug auf dem Eingriffsteil (15) ausgebildet ist, wobei das Verfahren durch die folgenden Schritte **gekennzeichnet** ist:
Erzeugen einer pulsierenden elektrischen Entladung zwischen einer Elektrode und dem Eingriffsteil (15) in einer Prozessflüssigkeit, wobei die Elektrode Folgendes umfasst:
einen Formkörper, der aus einem Metallpulver, einem Siliciumpulver oder einem Gemisch von Pulvern aus einer/einem oder mehreren Metallverbindungen oder Keramiken geformt ist, oder
den Formkörper nach der Verarbeitung mittels einer Wärmebehandlung;
Auftragen einer Schicht aus einem Elektrodenmaterial oder einer beliebigen Substanz kombiniert mit dem Elektrodenmaterial auf das Rotationselement oder das Gehäuse mit Energie der elektrischen Entladung; und
wechselseitiges Ausführen des Auftragsschrittes zum Bilden des Überzugs aus aufgetragenen Schichten.

2. Verfahren nach Anspruch 1, wobei die Elektrode den Formkörper umfasst, der aus einem oder mehreren der Folgenden gebildet ist: Ti, Si, cBN, TiC, WC, SiC, Cr₃C₂, Al₂O₃, ZrO₂-Y, TiN, TiB, hexagonales BN, MoS₂, Cr₂O₃, WS₂ und BaZrO₄.

3. Verfahren nach Anspruch 1 oder 2 zum Bilden eines Überzugs auf dem Rotationselement (5), wobei der Erzeugungsschritt das Herstellen der Elektrode nahe an dem Eingriffsteil (15) und das Drehen des Rotationselements (5) zum Bilden des Überzugs auf dem Eingriffsteil beinhaltet.

4. Verfahren zum Bilden eines Lagers aus einem Rotationselement (5), das drehbar mit einem Gehäuse (3) in Eingriff gebracht werden kann, **gekennzeichnet durch**:
Beschichten eines Eingriffsteils des Rotationselements mit dem Verfahren nach einem der Ansprüche 1 bis 3, das ferner Folgendes beinhaltet:
Ineingriffbringen eines Eingriffsobjektteils (13) des Gehäuses (3) mit einem Eingriffsteil (15), wobei der Eingriffsobjektteil (13) einen geringfügig größeren Innendurchmesser (D1) hat als ein Außendurchmesser (D3) des Eingriffsteils (15).

5. Verfahren nach Anspruch 4, ferner gekenntzeichnet durch Bilden einer Nut (13A) zum Sammeln einer Scbxnierflüssigkeit auf dem Eingriffsteil (15) und/oder dem Eizzgriffsobjektteil (13).

6. Verfahren zum Bilden eines Getriebes (1), das von einer Turbinenwelle einer Gasturbine angetrieben werden kann, **gekennzeichnet durch**:
Bereitstellen eines Gehäuses (3), das in einem Motormantel der Gasturbine auf der Außenseite des Motormantels gelagert ist, und
Beschichten des Gehäuses (3) oder einem Rotationselements (5) mit dem Verfahren nach einem der Ansprüche 1 bis 3;
Ineingriffbringen des Rotationselements (5), das mit einem Eingriffsteil (15) versehen ist, im Eingriff mit einem Eingriffsobjektteil (13) des Gehäuses (3), so dass es relativ zu dem Gehäuse (3) im Inneren des Gehäuses (3) drehbar ist;
wobei ein Innendurchmesser des Eingriffsobjektteils (13) geringfügig größer ausgebildet ist als ein Außendurchmesser des Eingriffsteils (15); und
Bilden einer Nut (13A) zum Sammeln einer Schmierflüssigkeit auf dem Eingriffsobjektteil (13) des Gehäuses (3).

7. Verfahren zum Bilden einer Rotationsmaschine, das das Beschichten eines Rotationselements (5) mit dem Verfahren nach einem der Ansprüche 1-3 beinhaltet, wobei das Rotationselement (5) in einem Mantel drehbar ist, und Ineingriffbringen des Rotationselementes (5) mit einem in dem Gestell montierten Rollenlager.

8. Verfahren zum Oberflächenbehandeln einer Welle (103, 111) von verstellbaren Leitschaufeln (101) zum Regulieren eines Fluids, **gekennzeichnet durch** Erzeugen einer pulsierenden elektrischen Entladung zwischen einer Elektrode, die eine Keramik enthält, die ausgewählt ist aus der Gruppe bestehend aus cBN, TiC, WC, SiC, Cr₃C₂, Al₂O₃, ZrO₂-Y, TiN und TiB, oder die Keramik und ein festes Schmiermittel enthält, das ausgewählt ist aus der Gruppe bestehend aus hexagonalem BN, MoS₂, Cr₂O₃, WS₂ und BaZrO₄, und einem Wellenabschnitt (103, 111) der verstellbaren Leitschaufeln (101) zum Regulieren des Fluids, und Ausbilden einer Überzugsschicht bestehend aus Elektrodenbestandteilen oder Verbindungen kombiniert in einer elektrischen Entladungsatmosphäre mit Abriebfreiheit und Gleitfähigkeit auf einer Oberfläche des Wellenabschnitts, wobei der Überzug aus aufgetragenen Schichten besteht, die **durch** wechselseitiges Durchführen von Schweißvorgängen **durch** die elektrischen Entladungen gebildet werden.

9. Verfahren zur Oberflächenbehandlung nach Anspruch 8, wobei das Verfahren zur Oberflächenbehandlung **dadurch gekennzeichnet ist, dass** die Überzugsschicht unter Rotation der Welle (103, 111) der verstellbaren Leitschaufeln zum Regulieren des Fluids gebildet wird.

## Revendications

1. Procédé de formation d'un revêtement sur un élément rotatif (5), destiné à s'engager de manière rotative ou basculante dans un boîtier (3), ou un boîtier (3) destiné à s'engager de manière rotative ou basculante dans un élément rotatif (5) ;
dans lequel l'élément rotatif ou le boîtier comprend une partie d'engagement destinée à s'engager en service dans l'autre élément, l'élément de rotation ou le boîtier (3), la partie d'engagement (15) comportant le revêtement qui y est formé, le procédé étant **caractérisé en ce qu'**il comprend les étapes ci-dessous :
génération d'une décharge électrique par impulsions entre une électrode et la partie d'engagement (15) dans un liquide de traitement, l'électrode comprenant ;
un corps moulé, moulé à partir d'une poudre métallique, d'une poudre de silicone ou d'un mélange de poudres d'un ou plusieurs composants métalliques ou de céramiques, ou
le corps moulé, après son traitement par un traitement thermique ;
dépôt d'une couche d'un matériau d'électrode et d'une quelconque substance combinée du matériau d'électrode sur l'élément rotatif ou le boîtier par l'intermédiaire de l'énergie de la décharge électrique ; et
exécution alternative de l'étape de dépôt pour former le revêtement composé de couches déposées.

2. Procédé selon la revendication 1, dans lequel l'électrode comprend le corps moulé formé à partir d'un quelconque ou de plusieurs substances, de Ti, Si, cBN, TIC, WC, SiC, Cr₃C₂, Al₂O₃, ZrO₂-Y, TiN, TiB, BN hexagonal, MoS₂, Cr₂O₃, WS₂ et BaZrO₄.

3. Procédé selon l'une quelconque des revendications 1 ou 2 pour former un revêtement sur un élément rotatif (5), dans lequel l'étape de génération comprend le rapprochement de l'électrode de la partie d'engagement (15) et la rotation de l'élément rotatif (5) pour former le revêtement sur la partie d'engagement.

4. Procédé de formation d'un palier d'un élément rotatif (5) pouvant s'engager de manière rotative dans un boîtier (3), **caractérisé par** l'étape ci-dessous :
revêtement d'une partie d'engagement de l'élément rotatif par l'intermédiaire du procédé selon l'une quelconque des revendications 1 à 3, et comprenant en outre l'étape ci-dessous :
engagement d'une partie sujette à l'engagement (13) du boîtier (3) dans une partie d'engagement (15), la partie sujette à l'engagement (13) ayant un diamètre intérieur (D1) légèrement supérieur au diamètre extérieur (D3) de la partie d'engagement (15).

5. Procédé selon la revendication 4, **caractérisé en outre par** l'étape de formation d'une rainure (13A) pour collecter un liquide de lubrification sur au moins une partie, la partie d'engagement (15) ou la partie sujette à l'engagement (13).

6. Procédé de formation d'une boîte d'engrenages (1) pouvant être entraînée par un arbre de turbine d'une turbine à gaz, **caractérisé par** les étapes ci-dessous :
fourniture d'un boîtier (3) supporté par un carter du moteur de la turbine à gaz au niveau de l'extérieur du carter du moteur ; et
revêtement d'un élément, du boîtier (3) ou d'un élément rotatif (5), par l'intermédiaire du procédé selon l'une quelconque des revendications 1 à 3 ;
engagement de l'élément rotatif (5) comportant une partie d'engagement (15) s'engageant dans une partie sujette à l'engagement (13) du boîtier (3), de sorte à permettre une rotation par rapport au boîtier (3) dans l'intérieur du boîtier (3) ;
un diamètre intérieur de la partie sujette à l'engagement (13) étant de forme légèrement supérieure à un diamètre extérieur de la partie d'engagement (15) ; et
formation d'une rainure (13A) pour collecter un liquide de lubrification sur la partie sujette à l'engagement (13) du boîtier (3).

7. Procédé de formation d'une machine rotative, comprenant l'étape de revêtement d'un élément rotatif (5) par l'intermédiaire du procédé selon l'une quelconque des revendications 1 à 3, l'élément rotatif (5) pouvant tourner dans un carter, et d'engagement de l'élément de rotation (5) dans un roulement à rouleaux monté dans le carter.

8. Procédé de traitement de surface d'un arbre (103, 111) d'aubes à incidence variable (101) pour assurer la régulation d'un fluide, **caractérisé par** les étapes de génération d'une décharge électrique par impulsions entre une électrode, englobant une quelconque céramique sélectionnée dans le groupe constitué de cBN, TiC, WC, SiC, Cr₃C₂, Al₂O₃, ZrO₂-Y, TiN et TiB, ou contenant la céramique et un quelconque lubrifiant solide sélectionné dans le groupe constitué de BN hexagonal, MoS₂, Cr₂O₃, WS₂ et BaZrO₄, et une partie d'arbre (103, 111) des aubes à incidence variable (101) pour assurer la régulation du fluide, et comprenant l'étape de formation d'une couche de revêtement composée de constituants de l'électrode ou de composés combinés dans une atmosphère à décharge électrique, présentant des propriétés anti-abrasives et un pouvoir lubrifiant sur une surface de la partie d'arbre, le revêtement étant composé de couches déposées formées en exécutant de manière alternative le soudage par l'intermédiaire des décharges électriques.

9. Procédé de traitement de surface selon la revendication 8, le procédé de traitement de surface étant **caractérisé en ce que** la couche de revêtement est formée par rotation de l'arbre (103, 111) des aubes à incidence variable pour assurer la régulation du fluide.
